# EUROPEAN PATENT APPLICATION

(11) **EP 3 342 673 A1**
(43) Date of publication of application: **04.07.2018**
(21) Application number: 17202259.2
(22) Date of filing: 17.11.2017
(51) Int. Cl.: B61F 5/10, B60G 11/62, F16F 13/00

(54) **AIR SPRING**

(30) Priority: 27.12.2016 JP 2016253988
(71) Applicant: Toyo Tire&Rubber Co., Ltd., Itami-shi Hyogo 664-0847 (JP)
(72) Inventor: Yasunaga, Yuuki, Hyogo, 664-0847 (JP)
(74) Representative: Knoop, Philipp

(57) **Abstract**

It is an object to provide an air spring that can be easily separated into two units and easily assembled. The air spring includes: an upper plate 2; a lower plate 3; a tubular flexible member 4 provided between the upper plate 2 and the lower plate 3; and an elastic mechanism 5 attached to the lower plate 3, wherein the elastic mechanism 5 includes a receiving section 13 that receives the lower plate 3, and the receiving section 13 and the lower plate 3 are spigot-fitted.

## Description

### [Technical Field]

The present invention relates to an air spring used in a vehicle such as a railway vehicle.

### [Background of the Invention]

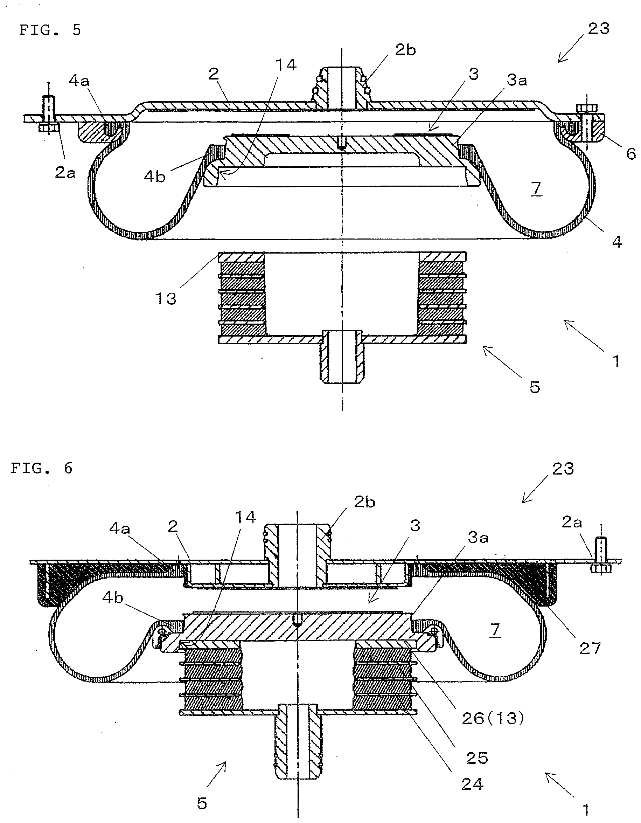

As shown in Figure 5 in Japanese Patent Laid-Open No. 10-288236, a conventionally known air spring used in a railway vehicle or the like includes: an upper plate attached to a vehicle body of a vehicle; a lower plate placed below the upper plate; a rubber flexible member (diaphragm or bellows) reinforced with a reinforcing cord and provided between the upper plate and the lower plate; and an elastic mechanism provided between a support frame of a bogie and the lower plate. The elastic mechanism, which is typically called a stopper, often includes a rubber layer and a steel plate alternately laminated.

The air spring having the above configuration is attached to the vehicle by attaching the elastic mechanism to the support frame of the bogie, and placing the vehicle body on the upper plate while aligning a recess of an intake/exhaust port provided in a bottom surface of the vehicle body with a hollow shaft (boss) on the upper plate to fit each other. This allows air between the vehicle body and the air spring to be sucked and exhausted. During maintenance of the vehicle, the vehicle body is lifted from the bogie to separate the vehicle body from the upper plate of the air spring.

However, when the vehicle body is separated from the upper plate and then returned to its original position, it is necessary to place the vehicle body on the upper plate while aligning the recess of the intake/exhaust port provided in the bottom surface of the vehicle body with the boss on the upper plate to fit each other, which requires effort and time.

To solve the above problem, an air spring of a type whose upper plate is screwed to a bottom surface of a vehicle body, or of a type in which a part of a bottom surface of a vehicle body is used as an upper plate and a flexible member is directly screwed to the bottom surface of the vehicle body by an attachment ring has been used. This keeps connection between an intake/exhaust port of the vehicle body and a boss on an upper plate even during maintenance of the vehicle.

### [Prior Art Document]

### [Patent Document]

[Patent Document 1] Japanese Patent Laid-Open No. 10-288236

### [Summary of Invention]

### [Problems to be Solved by the Invention]

However, for the air spring of a type whose upper plate is screwed to the bottom surface of the vehicle body, or of a type in which a part of the bottom surface of the vehicle body is used as an upper plate and the flexible member is directly screwed to the bottom surface of the vehicle body by the attachment ring, it is necessary to detach the upper plate screwed to the vehicle body or detaching the attachment ring that secures the flexible member when the vehicle body is lifted from the bogie during maintenance of the vehicle.

In view of the above problem, an object of the present invention is to provide an air spring that can be easily separated into two units and easily assembled.

### [Means for Solving the Problems]

To achieve the object, one aspect of the present invention provides an air spring including: an upper plate; a lower plate; a tubular flexible member provided between the upper plate and the lower plate; and an elastic mechanism attached to the lower plate, wherein the elastic mechanism includes a receiving section that receives the lower plate, and the receiving section and the lower plate are easily detachably spigot-fitted.

According to the above aspect, the lower plate and the receiving section of the elastic mechanism are easily detachably spigot-fitted, and thus the air spring can be easily separated into two units: a unit including the upper plate, the flexible member, and the lower plate, and a unit including the elastic mechanism. Further, the two units can be easily assembled even without exact alignment of central axes of the lower plate and the elastic mechanism since the lower plate is connected to the flexible member.

Further, in addition to the above aspect, a restriction member that restricts relative rotation between the lower plate and the elastic mechanism may be provided. The relative rotation refers to a relative rotation around a central axis. This can prevent twist (twist around the central axis) of the flexible member during assembly of the air spring or by use of the air spring.

The upper plate, the flexible member, and the lower plate of the air spring may define an air chamber, and the air chamber may be configured such that pressurized air can be trapped therein. Specifically, the air chamber is configured airtightly, and thus all loads placed on the air chamber can be used as a force to press the lower plate against the elastic mechanism in use of the air spring, thereby more firmly locking the lower plate to the elastic mechanism.

The air spring of the above aspect may be attached to a railway vehicle. Specifically, the railway vehicle includes: a vehicle body; a bogie; and an air spring of the above aspect provided between the vehicle body and the bogie, wherein the air spring is separable into a set of an upper plate connected to the vehicle body, a flexible member, and a lower plate, and an elastic mechanism connected to the bogie. With the railway vehicle of the above aspect, the vehicle body can be easily lifted and separated from the bogie, and the lifted vehicle body can be easily returned to the bogie during maintenance.

In particular, if the upper plate is formed of a part of a bottom surface of the vehicle body, detaching an upper end of the flexible member from the bottom surface of the vehicle body as the upper plate requires effort. Thus, the separable air spring can significantly increase workability.

With the air spring according to one aspect of the present invention, the lower plate and the elastic mechanism are spigot-fitted, and thus the air spring can be easily separated into two units: the unit including the upper plate, the flexible member, and the lower plate, and the unit including the elastic mechanism, and easily assembled.

### [BRIEF DESCRIPTION OF THE DRAWINGS]

Figure 1 is a vertical sectional view of a first embodiment of an air spring according to the present invention;
Figure 2 is a vertical sectional view of the air spring in Figure 1 being separated;
Figure 3 is a schematic view of a railway vehicle to which the air spring in Figure 1 is attached;
Figure 4 is a vertical sectional view of a second embodiment of an air spring according to the present invention;
Figure 5 is a vertical sectional view of the air spring in Figure 4 being separated;
Figure 6 is a vertical sectional view of a third embodiment of an air spring according to the present invention;
Figure 7 is a vertical sectional view of the air spring in Figure 6 being separated;
Figure 8 is a partially enlarged sectional view of a variant of the air spring according to the first embodiment.

### [DETAILED DESCRIPTION OF THE PREFERRED EMBODIMENTS]

### [First Embodiment]

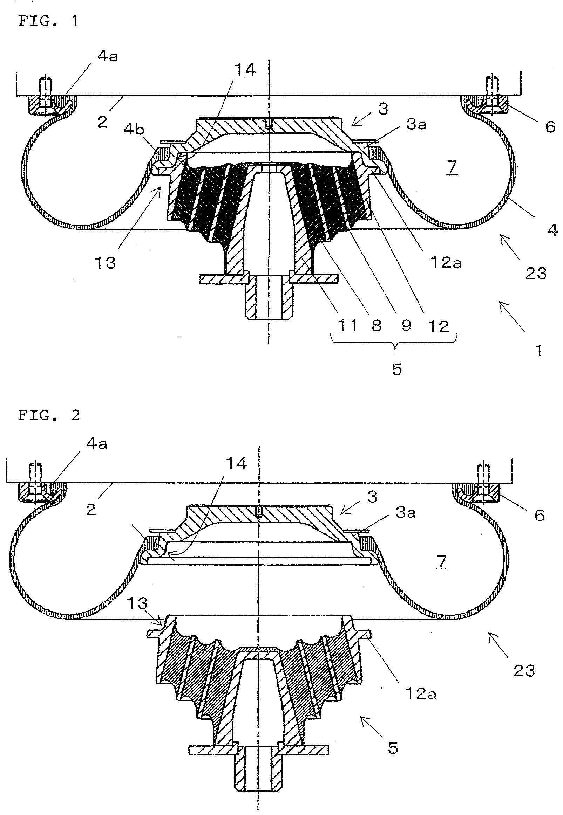

Now, with reference to the drawings, a first embodiment of the present invention will be described. Figures 1 and 2 are vertical sectional views of a first embodiment of an air spring for a railway vehicle according to the present invention. Figure 1 shows a receiving section of an elastic mechanism and a lower plate being spigot-fitted, and Figure 2 shows the receiving section of the elastic mechanism and the lower plate being separated.

In this embodiment, a part of a bottom surface of a vehicle body is used as an upper plate. Specifically, the air spring 1 includes an upper plate 2 constituted by a part of the bottom surface of the vehicle body of the vehicle, a lower plate 3 placed below the upper plate 2, a tubular flexible member 4 provided between the upper plate 2 and the lower plate 3, and an elastic mechanism 5 provided between the lower plate 3 and a support frame of a bogie.

In this embodiment, a man bellows of rubber is used as the flexible member 4. The flexible member 4 is formed of tubular laminated rubber with a reinforcing rubber layer in which a reinforcing cord is embedded being an intermediate layer. Thick bead sections 4a, 4b each having a reinforcing rubber layer wound around a bead core are formed at an upper end and a lower end of the flexible member 4.

The lower plate 3 is formed of a metal material into a disk shape. A cylindrical bead receiving section 3a protruding toward the upper plate 2 is formed on the lower plate 3. The bead section 4a at the upper end of the flexible member 4 is secured by a screw between an attachment ring 6 and the upper plate (bottom surface of the vehicle body) 2. The bead section 4b at the lower end is fitted in the bead receiving section 3a and secured to the lower plate 3.

Thus, the upper plate 2, the flexible member 4, and the lower plate 3 airtightly define an air chamber 7. The upper plate 2 has an air intake/exhaust port (not shown), and the air chamber 7 is configured such that pressurized air can be trapped therein. In this embodiment, the lower plate 3 blocks passage of air between the air chamber 7 and the elastic mechanism 5, but not limited to this, a through hole may be formed in the lower plate 3 so that air can be sucked into/exhausted from the air chamber through the elastic mechanism 5.

The elastic mechanism 5 has a laminated rubber structure including an elastic layer 8 and an intermediate cylinder 9 alternately laminated, and is integrally vulcanized with a central material 11 and an outer cylinder 12. Specifically, the central material 11 has a cylindrical shape with a tapered cylindrical upper section, and the elastic layer 8 of a rubber material is provided over the entire circumference of the central material 11 so as to have an inverted V-shaped section. The intermediate cylinder 9 having a tapered cylindrical shape of a hard material such as metal with a truncated conical profile is placed on a circumference of the elastic layer 8. As such, the laminated rubber structure includes the elastic layer 8 and the intermediate cylinder 9 alternately arranged, and the outer cylinder 12 having a tapered cylindrical shape is arranged as an outermost layer. This forms a so-called conical stopper.

A flange section 12a is provided radially outward on an upper portion of an outer peripheral surface of the outer cylinder 12. The flange section 12a and an upper end of the outer cylinder located above the flange section 12a form a receiving section (hereinafter referred to as a fitting protrusion) 13 that receives the lower plate. In a bottom surface of the lower plate, a fitting recess 14 is formed in which the fitting protrusion 13 can be spigot-fitted. "Spigot-fitting" here means such fitting that an outer diameter of the fitting protrusion 13 is substantially equal to an inner diameter of the fitting recess 14.

As such, the lower plate 3 is locked to the elastic mechanism 5 by spigot-fitting. A step surface between the fitting protrusion 13 and the fitting recess 14 may be a vertical surface, but is a tapered surface in this embodiment. This allows the lower plate 3 and the elastic mechanism 5 to be smoothly fitted without a gap. Also, a fitting protrusion may be formed on the bottom surface of the lower plate 3, and a fitting recess may be formed in the elastic mechanism.

The lower plate 3 and the elastic mechanism 5 are locked only by spigot-fitting, and no fastening means such as a bolt and a nut is used. However, when the air spring 1 is attached to the railway vehicle for use, a load of the vehicle body is placed on the lower plate 3 via the air spring 1, and a force to press the lower plate 3 downward always acts on the lower plate 3. Thus, in normal use, the lower plate 3 is not likely to be unlocked from the elastic mechanism 5.

In particular, in this embodiment, the air chamber 7 defined by the upper plate 2, the flexible member 4, and the lower plate 3 is configured such that pressurized air can be trapped therein. Thus, in use of the air spring 1, all the loads placed on the air chamber 7 can be used as a force to press the lower plate 3 against the elastic mechanism 5. Thus, the lower plate 3 can be more firmly locked to the elastic mechanism 5. As described above, in this embodiment, the lower plate 3 and the elastic mechanism 5 are locked only by spigot-fitting, but fastening means such as a bolt and a nut may be also used.

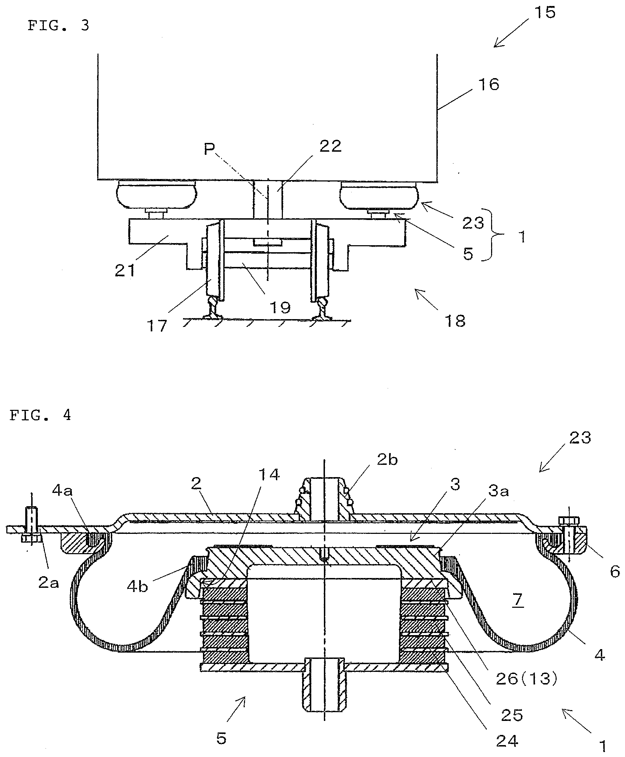

Figure 3 is a schematic view of a railway vehicle to which the air spring according to this embodiment is attached. The railway vehicle 15 includes a vehicle body 16, a bogie 18 having wheels 17, and the air spring 1 provided between the vehicle body 16 and the bogie 18. The bogie 18 is a bolsterless bogie, and includes a support frame 21 that rotationally supports a pair of front and rear axles 19 each having a pair of left and right wheels 17 that roll on a rail, and a rotation axis 22 for pivotally holding the support frame 21 around a vertical axis P with respect to the vehicle body 16. A pair of left and right air springs 1,1 are provided between a bottom surface of the vehicle body 16 and the support frame 21.

For maintenance of the railway vehicle 15 having the above configuration, the vehicle body 16 to which the flexible member 4 is secured is lifted to detach the vehicle body 16 from the rotation axis 22, and as shown in Figure 2, the air spring 1 can be easily separated into a unit 23 including the upper plate 2, the flexible member 4, and the lower plate 3 (hereinafter referred to as an air chamber unit) and a unit including the elastic mechanism 5.

This allows the vehicle body 16 and the bogie 18 to be separated to allow easy maintenance. Also, even if the air spring 1 is separated into the air chamber unit and the unit including the elastic mechanism, airtightness of the air chamber unit 23 is kept, thereby allowing easy assembly of the air spring 1. Specifically, at the end of maintenance, the vehicle body 16 is inserted into the rotation axis 22, and the lower plate 3 and the elastic mechanism 5 are spigot-fitted with the vehicle body 16 being still lifted from the bogie 18. Then, the vehicle body 16 is completely placed on the bogie 18 to finish assembly of the air spring 1. As described above, if the upper plate is formed of a part of the bottom surface of the vehicle body, detaching the attachment ring 6 to which the bead section 4a at the upper end of the flexible member 4 is secured requires effort. Thus, the separable air spring can significantly increase workability.

### Second embodiment

Figures 4 and 5 are vertical sectional views of a second embodiment of an air spring. Figure 4 shows a receiving section of an elastic mechanism and a lower plate being spigot-fitted, and Figure 5 shows the receiving section of the elastic mechanism and the lower plate being separated. A difference between this embodiment and the first embodiment is that, in this embodiment, a part of a bottom surface of a vehicle body is not used as an upper plate, but an upper plate separate from the bottom surface of the vehicle body is used and that a different type of elastic mechanism (stopper) is used. Other configurations are similar to those in the first embodiment. For convenience, members having the same function as the members described in the first embodiment are denoted by the same reference numerals.

As shown in Figure 4, a disk-like upper plate 2 is used in this embodiment. A bead section 4a at an upper end of the flexible member 4 is secured by a screw between an attachment ring 6 and the upper plate 2. A bead section 4b at a lower end is fitted in a bead receiving section 3a and secured to a lower plate 3.

The elastic mechanism 5 has a laminated rubber structure including an annular hard plate 24 of metal and an annular elastic material layer 25 of rubber vertically alternately laminated, and a top plate 26 that is a hard plate is attached as an uppermost layer. In this embodiment, the top plate 26 functions as a receiving section 13 that receives the lower plate 3. Specifically, the top plate 26 is a fitting protrusion 13, and a fitting recess 14 in which the fitting protrusion 13 can be spigot-fitted is formed in a bottom surface of the lower plate 3. The lower plate 3 and the elastic mechanism 5 are spigot-fitted to assemble the air spring 1.

Two screwing sections 2a protrude radially outward from an outer peripheral surface of the upper plate 2 at 180° intervals. With a boss section 2b formed at a center of the upper plate 2 being fitted in a recessed intake/exhaust port (not shown) formed in the vehicle body, the screwing section 2a is screwed to the bottom surface of the vehicle body to attach the upper plate 2 to the bottom surface.

For maintenance of the railway vehicle to which the air spring 1 is attached, as shown in Figure 5, the vehicle body to which the upper plate 2 is secured can be lifted to easily separate the air spring 1 into an air chamber unit 23 and a unit including the elastic mechanism 5. This can omit effort to detach the upper plate 2, eliminate the need for maintenance for ensuring airtightness around the boss section 2b and the intake/exhaust port once the upper plate 2 is detached from the vehicle body, and increase workability.

### Third embodiment

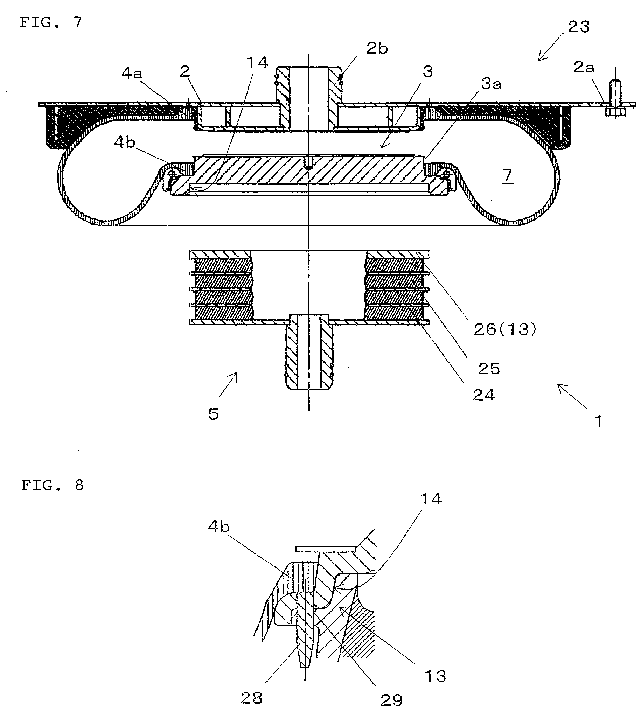

Figures 6 and 7 are vertical sectional views of a third embodiment of an air spring. Figure 6 shows a receiving section of an elastic mechanism and a lower plate being spigot-fitted, and Figure 7 shows the receiving section of the elastic mechanism and the lower plate being separated. A difference between this embodiment and the second embodiment is that, in this embodiment, a rubber diaphragm is used as a flexible member and that along therewith, shapes of an upper plate and a lower plate are changed. Other configurations are similar to those of the second embodiment.

As shown in Figure 6, in this embodiment, a rubber section 27 is formed on an upper plate 2 to restrict horizontal displacement of a diaphragm as a flexible member 4. Similar to the second embodiment, two screwing sections 2a protrude from an outer peripheral surface of the upper plate 2 at 180° intervals. The elastic mechanism 5 has a laminated rubber structure, and a top plate 26 as an uppermost layer functions as a receiving section 13 that receives the lower plate 2.

The embodiments of the present invention have been described above, but the scope of the present invention is not limited to this, various changes may be made without departing from the gist of the invention. For example, in the first to third embodiments, it has been described that the lower plate and the elastic mechanism are locked only by spigot-fitting, however, a restriction member that restricts relative rotation between the lower plate and the elastic mechanism may be provided.

Specifically, Figure 8 shows a variant in which a restriction member is provided in the air spring according to the first embodiment. As shown, in this variant, a tapered hole 29 that extends through the lower plate 3 and the elastic mechanism 5 spigot-fitted is provided, and a wedge-like pin as a restriction member 28 is inserted into the tapered hole 29. This can prevent twist of a flexible member (twist around a central axis) during assembly of the air spring or by use of the air spring.

Also in the first to third embodiments, it has been described that an engaging protrusion is formed on the receiving section and an engaging recess is formed in the lower plate, but not limited to this, of course, the engaging recess may be formed in the receiving section and the engaging protrusion may be formed on the lower plate so that both are spigot-fitted. The structural features disclosed in the first to third embodiments and the variant may be combined, and a combination thereof can form a new technical feature.

### Reference Signs List

- 1: air spring
- 2: upper plate
- 2a: screwing section
- 2b: boss section
- 3: lower plate
- 3a: bead receiving section
- 4: flexible member
- 4a, 4b: bead section
- 5: elastic mechanism
- 6: attachment ring
- 7: air chamber
- 8: elastic layer
- 9: intermediate cylinder
- 11: central material
- 12: outer cylinder
- 12a: flange section
- 13: receiving section (fitting protrusion)
- 14: fitting recess
- 15: railway vehicle
- 16: vehicle body
- 17: wheel
- 18: bogie
- 19: axle
- 21: support frame
- 22: rotation axis
- 23: air chamber unit
- 24: hard plate
- 25: elastic material layer
- 26: top plate
- 27: rubber section
- 28: restriction member
- 29: tapered hole

## Claims

1. An air spring comprising:
an upper plate;
a lower plate;
a tubular flexible member provided between the upper plate and the lower plate; and
an elastic mechanism attached to the lower plate,
wherein the elastic mechanism includes a receiving section that receives the lower plate, and the receiving section and the lower plate are detachably spigot-fitted.

2. The air spring according to claim 1, wherein a restriction member that restricts relative rotation between the lower plate and the elastic mechanism is provided.

3. The air spring according to claim 1 or 2, wherein the upper plate, the flexible member, and the lower plate define an air chamber, and the air chamber is configured such that pressurized air can be trapped therein.

4. A railway vehicle comprising:
a vehicle body;
a bogie; and
an air spring according to any one of claims 1 to 3 provided between the vehicle body and the bogie,
wherein the air spring is separable into a set of an upper plate connected to the vehicle body, a flexible member, and a lower plate, and an elastic mechanism connected to the bogie.

5. The railway vehicle according to claim 4, wherein the upper plate is formed of a part of the vehicle body.
